Europäisches Patentamt

European Patent Office

Office européen des brevets

(19)

(11) Veröffentlichungsnummer: **0 060 602**
**B1**

(12) # EUROPÄISCHE PATENTSCHRIFT

(45) Veröffentlichungstag der Patentschrift:
02.09.87

(21) Anmeldenummer: 82200322.4

(22) Anmeldetag: 11.03.82

(51) Int. Cl.⁴: **B 29 C 55/00**

(54) **Verfahren zur molekularen Orientierung von Kunststoffmaterial.**

(30) Priorität: 13.03.81 CH 1740/81

(43) Veröffentlichungstag der Anmeldung:
22.09.82 Patentblatt 82/38

(45) Bekanntmachung des Hinweises auf die Patenterteilung:
02.09.87 Patentblatt 87/36

(84) Benannte Vertragsstaaten:
AT BE DE FR GB IT NL SE

(56) Entgegenhaltungen:
DE-A-1 479 921
DE-A-1 504 617
FR-A-2 205 401
GB-A-1 182 632
US-A-2 804 642

(73) Patentinhaber: **Tetra Pak Finance & Trading S.A.,
70, Avenue C.F. Ramuz, CH- 1009 Pully- Lausanne
(CH)**

(72) Erfinder: **Petersen Hoj, Peter, Vildrosevej 15, DK-
3060 Espergärde (DK)**
Erfinder: **Kjaerbye Petersen, Steffen,
Bybaekterrasserne 199F, DK- 3520 Farum (DK)**
Erfinder: **Poulsen, Stig, Agerflöjen 34, Dästrup DK-
4130 Viby Sj. (DK)**

(74) Vertreter: **Sevrell, Sven- Gösta Uno, Tetra Pak
International AB Patent Department Box 1701,
S-22101 Lund 1 (SE)**

## Beschreibung

Die vorliegende Erfindung bezieht sich auf ein Verfahren zur molekularen Orientierung von Kunststoffmaterial wobei man einen Schlauch aus Kunststoffmaterial in einen mit einer erhitzten Flüssigkeit gefüllten Behälter einführt und unter Druck Flüssigkeit in das Innere des Schlauches einführt, der infolge des in dem Schlauch herrschenden Innendruckes ausgedehnt wird, und zwar vorzugsweise in der Querrichtung des Schlauches.

In der Verpackungstechnik wird Polyäthylenterephthalat (PET), das volkstümlicher als Polyester bezeichnet wird, für die Herstellung von Verpackungen für unter Druck stehende Inhaltsstoffe verwendet. Der Grund dafür besteht darin, dass Polyestermaterial gute mechanische Festigkeitseigenschaften hat, die weiter verbessert werden können, wenn das Polyestermaterial einer molekularen Orientierung unterworfen wird. Eine molekulare Orientierung wird erzielt, indem man das Material innerhalb eines bestimmten Temperaturbereiches, der für Polyester 70 bis 100° C beträgt, reckt. Wenn die Temperatur zu niedrig ist, ist es im grossen und ganzen unmöglich, das Material ohne Zerreissen desselben zu recken, und wenn die Temperatur zu hoch ist, findet nur ein Dünnerwerden des Materials, nicht aber die beabsichtigte molekulare Orientierung statt. Wenn die Reckung des Materials innerhalb des angegebenen Temperaturbereiches ausgeführt wird, erhält man eine molekulare Orientierung, deren Ausmass zum Teil von der Temperatur, zum Teil von dem Grad des Reckens abhängt, wobei, wie bereits weiter oben erwähnt, die mechanischen Eigenschaften, z. B. die Zugfestigkeit, durch molekulare Orientierung wesentlich verbessert werden. Eine Reckung des Materials in nur einer Richtung ruft eine sogenannte monoaxiale Orientierung hervor, das heisst, das Material wird nur in einer Richtung molekular orientiert, was bedeutet, dass die verbesserten Festigkeitseigenschaften des Kunststoffmaterials nur in derjenigen Richtung, in der das Material gereckt worden ist, erhalten werden. Für viele Zwecke genügt eine monoaxiale Reckung, aber bei z. B. Behältern mit unter Druck stehenden Inhaltsstoffen, wie Flaschen oder andere Verpackungen für Bier oder Erfrischungsgetränke, wirken die Beanspruchungen in dem Material nicht nur in einer Richtung, was bedeutet, dass die verbesserten Festigkeitseigenschaften in der Richtung, in der das Material gereckt wurde, nicht ausgenützt werden können, weil das Material keine entsprechend guten Festigkeitseigenschaften in der Richtung, die senkrecht zur Richtung der Orientierung ist, hat. Diese Schwierigkeit kann jedoch überwunden werden, wenn das Material biaxial, das heisst in zwei im rechten Winkel zueinander stehenden Richtungen, orientiert wird, wobei ein Kunststoffmaterial erhalten wird, das im Prinzip eine gleichmässige Festigkeit hat. Beim Blasformen von Polyesterflaschen tritt keine Ausdehnung in nur einer Richtung ein, sondern das Material wird biaxial orientiert, wenn das Blasformen innerhalb des weiter oben angegebenen Temperaturbereiches ausgeführt wird. Derartige durch Blasen geformte Polyesterflaschen finden in grossem Umfang Verwendung für die Verpackung von z. B. Erfrischungsgetränken, aber es ist ein Nachteil dieser Flaschen, dass das einzelne Blasformen von Flaschen eine geringe Produktionskapazität und somit ein teures Produkt herbeiführt. Ferner ist die Orientierung, die beim Blasformen dieser Flaschen erhalten wird, nicht gleichmässig, sondern die Orientierung in der Längsrichtung ist im allgemeinen beträchtlich geringer als die Orientierung in der Querrichtung der Flasche, und das Ausmass der Orientierung innerhalb der verschiedenen Teile der Flasche, nämlich dem Boden, dem zylindrischen Teil, dem den Hals bildenden Teil usw., zeigt grosse Schwankungen.

Somit besteht Bedarf für ein verhältnismässig gleichmässiges, biaxial orientiertes Polyestermaterial, und ein solches Material kann nach dem Stande der Technik dadurch hergestellt werden, dass eine nicht-orientierte Materialbahn mit speziellen Greifern entlang ihrer Randzonen eingespannt und durch Auseinanderbewegen der Greifer in Querrichtung der Bahn gereckt wird, während die Bahn gegebenenfalls gleichzeitig in ihrer Längsrichtung gereckt wird. Bei einem derartigen Orientierungsverfahren entstehen aber sehr hohe Verluste (bis zu 40%), und daher ist seine Anwendung teuer.

Durch die DE-A-1 504 617 ist ein Verfahren der eingangs genannten Art zur biaxialen molekularen Orientierung von Kunststoffmaterial bekannt, bei dem ein Schlauch aus diesem Kunststoffmaterial in ein Heizbad eingeführt und in das Schlauchinnere eine Flüssigkeit unter Druck eingebracht wird, wodurch der Schlauch ausgedehnt wird, während gleichzeitig mittels der erhitzten Flüssigkeit im Behälter eine Konditionierung der Schlauchfolie im Sinne ihrer Erwärmung erfolgt.

Die Erfindung schlägt ein Verfahren dieser Art zur Orientierung mit einem verhältnismässig gleichmässigen Ausmass der Orientierung eines Kunststoffmaterials, insbesondere von Polyestermaterial, vor. Dieses Verfahren ist dadurch gekennzeichnet, dass man den Schlauch aus einer vorgefertigten Bahn aus Kunststoffmaterial herstellt, indem man die Längsränder der Bahn unter Bildung einer dichten und festen Längsnaht miteinander verbindet, dass man ein Füllrohr für die Zuführung von unter Druck stehender erhitzter Flüssigkeit, vorzugsweise Wasser, durch ein offenes Ende in den Schlauch einführt, das Füllrohr mit einer Dichtung versieht, die um das Füllrohr herum angeordnet ist, und den Raum zwischen der Aussenseite des Füllrohres und der Innenseite des Schlauches dicht abschliesst, dass man den Schlauch in geöffnetem Zustand durch ein Loch in der Behälterwandung in den Behälter einführt, dass man den unter Orientierung gereckten Schlauch nach dem Verlassen des mit erhitzter Flüssigkeit gefüllten Behälters durch einen Walzenspalt frei in einen zweiten, mit kalter Flüssigkeit gefüllten Behälter einführt, um den Schlauch in gesteuerter Weise zu kühlen, und dass die erhitzte Flüssigkeit in dem Behälter und die unter Druck stehende Flüssigkeit in dem Schlauch eine Temperatur von 70 bis 100° C, vorzugsweise 80 bis 90° C, haben.

Die Erfindung wird nun anhand der beiliegenden schematischen Zeichnung beschrieben, worin

Fig. 1 eine Schnittansicht einer Anordnung für die Durchführung des erfindungsgemässen Verfahrens zeigt und

Fig. 2 eine stark vergrösserte Schnittansicht eines unter Orientierung gereckten Polyesterlaminates darstellt.

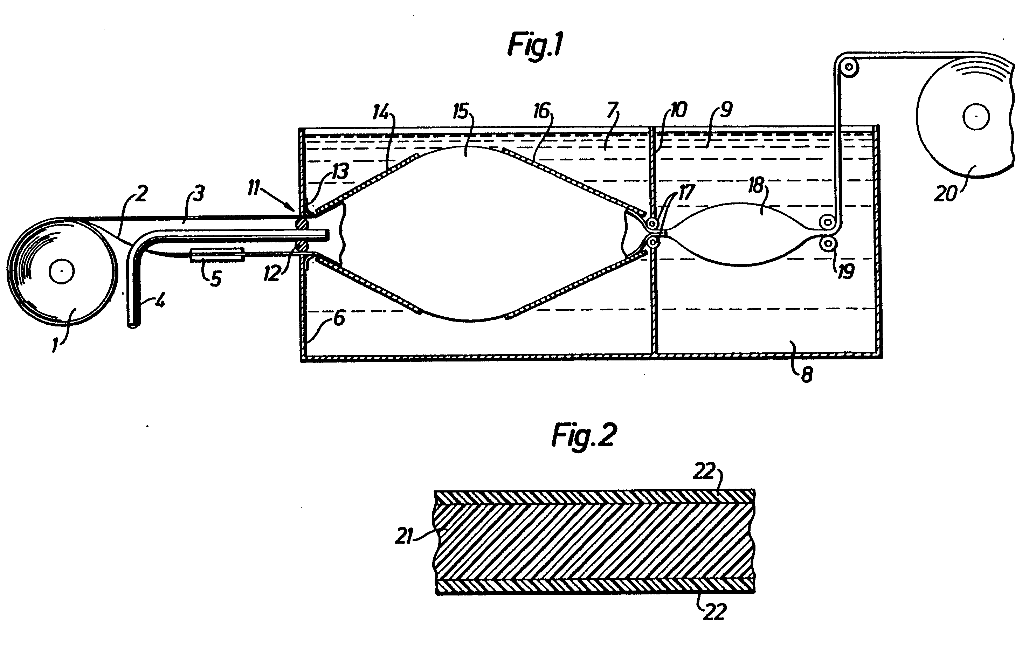

Die in Fig. 1 schematisch dargestellte Anordnung für die Durchführung des erfindungsgemässen Verfahrens weist die folgenden Teile auf: eine Vorratsrolle 1, die eine vorgefertigte Bahn 2 aus nicht-orientiertem oder in Längsrichtung orientiertem Kunststoffmaterial, z.B. einem Laminat des Typs, der in Fig. 2 dargestellt ist, enthält. Die Bahn 2 wird mit Hilfe einer nicht dargestellten Formvorrichtung zu einem Schlauch 3 gefaltet, indem die Randzonen der Bahn 2 miteinander in einer Überlappungsverbindung verbunden werden. Das Verschweissen der Überlappungsverbindung erfolgt mit Hilfe einer Siegelvorrichtung 5, mit deren Hilfe die überlappenden Randzonen unter oberflächlichem Schmelzen erhitzt und durch gleichzeitiges Aneinanderpressen miteinander verbunden werden. In dem Teil des Schlauches, der nach hinten offen ist, wird ein Füllrohr 4 für die Zuführung von unter Druck stehender Flüssigkeit eingeführt; das Füllrohr 4 erstreckt sich durch den Schlauch 3 und durch eine Öffnung 11 in der Seitenwandung eines Behälters 6 in diesen Behälter. Der Schlauch 3 wird ebenfalls durch die genannte Öffnung 11 der Seitenwandung des Behälters eingeführt, wobei die Öffnung 11 des Behälters 6 mit einem elastischen Dichtungsring 13 versehen ist, der in dem Behälter 6 entlang des Umfanges der Öffnung 11 fixiert ist und dessen äussere Teile so angeordnet sind, dass sie eine Dichtung gegen die Aussenseite des Schlauches 3 bilden. Um den vorderen Teil des Füllrohres 4 ist überdies ein Dichtungsring 12 vorgesehen, der eine Dichtung gegen das Füllrohr 4 sowie eine Dichtung gegen die Innenseite des Schlauches 3 bildet.

Der Behälter 6 ist mit einer Flüssigkeit 7, vorzugsweise Wasser, gefüllt und mit Vorrichtungen zum Erhitzen der Flüssigkeit auf eine Temperatur zwischen 70 und 100° C, vorzugsweise von annäherungsweise 80 bis 90° C, versehen, und nicht-dargestellte Thermostaten sind so angeordnet, dass die Temperatur der Flüssigkeit 7 auf den gewünschten Wert gesteuert werden kann. Die Auslassöffnung des Behälters 6 wird von zwei parallelen Walzen 17 gebildet, die in der Seitenwand 10 angeordnet sind und die gemeinsam eine langgestreckte Öffnung bilden, durch die der unter Orientierung gereckte Schlauch 3 in abgeflachtem Zustand geführt werden kann. Um den in dem Flüssigkeitsbad 7 des Behälters 6 angeordneten Teil 15 des Schlauches zu führen, sind einerseits eine vorzugsweise konische Führungsfläche 14, die gegebenenfalls siebförmig ausgebildet ist und an der Einlassöffnung des Behälters 6 angeordnet ist, und andererseits Führungsflächen 16, die in Richtung auf die Auslassöffnung 17 des Behälters 6 zusammenlaufen, vorgesehen. Durch die Auslassöffnung 17 in der Wand 10 wird der orientierte und abgeflachte Schlauch 3 in eine zweite Kammer 8 eingeführt, die ebenfalls mit Flüssigkeit gefüllt ist, aber mit einer Flüssigkeit 9 mit einer niedrigen Temperatur von annäherungsweise 10 bis 20° C. In der zweiten Kammer 8 sind überdies miteinander zusammenwirkende Quetschwalzen 19 vorgesehen, zwischen denen der abgekühlte Schlauch abgeflacht wird, worauf der abgeflachte Schlauch aus dem Flüssigkeitsbad aufwärts heraufgeführt wird, um schliesslich auf eine Vorratsrolle 20 aufgewikkelt zu werden.

Fig. 2 zeigt eine stark vergrösserte Schnittansicht eines erfindungsgemäss unter Orientierung gereckten Laminates, das im vorliegenden Falle einerseits eine Mittel- bzw. Grundschicht 21 aus einem unter Orientierung gereckten Polyestermaterial, der bei dem Recken unter Orientierung eine kristalline Struktur verliehen werden ist, und andererseits äussere, dünnere Überzugsschichten 22 aus sogenanntem mit Glycol modifizierten Polyester (PETG), die selbst nach dem Recken unter Orientierung eine im wesentlichen amorphe Molekularstruktur haben, aufweist.

Das erfindungsgemässe Verfahren kann folgendermassen ausgeführt werden:

Von der Vorratsrolle 1 wird eine Bahn 2 aus einem Kunststoffmaterial abgerollt, die im hier beschriebenen Falle nicht orientiert sein soll, z. B. ein Polyesterlaminat des in Fig. 2 dargestellten Typs. Die nicht-orientierte Bahn 2 wird zu einem Schlauch gefaltet, der mit Hilfe der Siegelvorrichtung 5 in einer Längsnaht verschweisst wird und der durch die Öffnung 11 in den Behälter 6 eingeführt wird. Die Aussenseite des Schlauches 3 wird mit Hilfe eines elastischen Dichtungsringes 13, der um den Umfang der Öffnung 11 fixiert ist, gegen die Oeffnung 11 abgedichtet.

Der Behälter 6, der zweckmässig thermisch isolierte Wandungen aufweist, ist mit einer Flüssigkeit 7, vorzugsweise Wasser, gefüllt, die auf eine für die Reckung unter Orientierung des Materials geeignete Temperatur erhitzt ist, die für Polyester annäherungsweise 80 bis 90° C beträgt. Wenn der Schlauch in das Flüssigkeitsbad 7 des Behälters 6 eingeführt wird, wird das Kunststoffmaterial in dem Schlauch erhitzt, so dass es allmählich die gleiche Temperatur wie das Flüssigkeitsbad annimmt und somit in einer geeigneten Weise für die Operation des Reckens unter Orientierung konditioniert wird. Durch das Füllrohr 4, das in den Schlauch 3 eingeführt wird und das in demjenigen Teil des Schlauches 3, der sich innerhalb des Behälters 6 befindet, endet, wird eine unter Druck stehende Flüssigkeit, die vorzugsweise Wasser sein kann, eingeführt. Um eine genügende Erhitzung der Innenseite des Kunststoffschlauches 3 zu erhalten, sollte die unter Druck stehende Flüssigkeit auf annäherungsweise 90° C erhitzt sein. Der Druck der Flüssigkeit muss dem Durchmesser des Schlauches 3 angepasst werden und kann in der Praxis zwischen 2 und 5 kg liegen. Damit der Flüssigkeitsdruck in dem Teil 15 des Kunststoffschlauches 3, der sich innerhalb des Behälters 6 befindet, aufrechterhalten werden kann, muss der Schlauch 3 dicht abgeschlossen werden, und dies erfolgt mit Hilfe des Dichtungsringes 12, der um das Füllrohr 4 in solcher Weise angeordnet ist, dass er auch eine Dichtung gegen die Innenseite des Schlauches 3 bildet. Um eine bessere Dichtung zu erzielen, wird der Dichtungsring 12 zweckmässig genau in dem Bereich der Oeffnung 11 angeordnet, so dass der Dichtungsring 12 von der Innenseite der Öffnung 11 abgestützt wird. Eine gewisse Undichtigkeit muss aber akzeptiert werden.

Da das Kunststoffmaterial in dem Teil des Kunststoffschlauches, der sich in dem Behälter 6 befindet, auf annäherungsweise 80 bis 90° C erhitzt und einem Innendruck ausgesetzt wird, ergeben sich Zugbeanspruchungen in dem Material, die zur Folge haben, dass der Schlauch in der in Fig. 1 dargestellten weise ausgedehnt wird. Die Ausdehnung des Schlauches wird mit Hilfe des formgleichen Stütz- bzw. Führungsfläche 14 geführt. Wegen der Ausdehnung des Schlauches 3 bei der angegebenen Temperatur ergibt sich eine molekulare Orientierung in der Querrichtung des Schlauches in den Kunststoffmaterial, was bedeutet, dass die Zugfestigkeit des Materials in der genannten Richtung in drastischer Weise zunimmt, während das Material gleichzeitig dünner wird, indem es ausgedehnt wird.

Neben der genannten Querorientierung des Schlauches 3 wird eine Längsorientierung ausgeführt, indem der Teil 15 des Schlauches beim Verlassen des Behälters 6 zwischen vorzugsweise angetriebenen Walzen 19 abgeflacht und gereckt wird. Die Walzen 17 in der Trennwand zwischen dem Behälter 6 und der Kammer 8 nehmen den Teil 15 des Schlauches zwischen sich auf, und die Walzen 17 bilden einen langgestreckten Raum in der Behälterwandung 10.

Die Abflachung des Teiles 15 des Schlauches wird mit Hilfe von zusammenlaufenden Führungsflächen 16 geführt, und der Antrieb der Trommeln oder Walzen 19 wird in solcher Weise gesteuert, dass die gewünschte Reckung des Teiles 15 des Schlauches in Längsrichtung des Schlauches erzielt wird. Der abgeflachte und biaxial orientierte Schlauch, der durch den langgestreckten Raum zwischen den Trommeln bzw. Walzen 17 austritt, wird in eine zweite Kammer 8 eingeführt, in der das Kühlbad 9 angeordnet ist, das Wasser mit einer Temperatur von annäherungsweise 10° C enthält. Wegen einer gewissen Undichtigkeit zwischen den Walzen oder Rollen 17 wird der Teil 18 des Schlauches, der sich in der Kammer 8 befindet, etwas aufgebläht, was jedoch den Verlauf des Abkühlungs- und Stabilisierungsprozesses nicht beeinflusst. Schliesslich wird der Teil 18 des Schlauches auf die Vorratsrolle 20 aufgewickelt.

Die Behandlung des biaxial gereckten Kunststoffschlauches ist nun beendet, und der Schlauch kann gewünschtenfalls aufgeschlitzt werden, um eine einzelne Materialbahn zu bilden.

Der Vorteil der Verwendung eines Kunststofflaminates gemäss Fig. 2, das heisst eines Laminates, das eine Mittelschicht 21 aus gewöhnlichem Standardpolyester und äussere Überzugsschichten 22 aus sogenanntem mit Glycol modifizierten Polyester (PETG) aufweist, besteht darin, dass dieses Laminat heiss verschweisst werden kann.

Normalerweise kann unter Orientierung gerecktes Polyestermaterial nicht verschweisst werden, und zwar wegen der kristallinen Struktur, die dem Polyestermaterial während der molekularen Orientierung verliehen wird. Das mitt Glykol modifizierte Polyestermaterial, das ein gutes Haftungsvermögen an gewöhnlichen Polyester hat, ist jedoch dadurch gekennzeichnet, dass es nicht in merklichem Ausmass kristallisiert, wenn es einer Reckung unter Orientierung unterworfen wird, so dass die beiden Schichten 22 als mit Glycol modifiziertem Polyester selbst nach dem Recken des Materials unter Orientierung heiss verschweiss werden können.

Es wurde gefunden, dass durch Anwendung des erfindungsgemässen Verfahrens ein biaxial orientiertes Polyestermaterial in billiger und rationeller Weise hergestel werden kann, wobei es sich überdies um ein orientiertes Polyestermaterial handelt, das heisst verschweisst werden kann, was von grossem Wert bei der Verpackungsherstellung die Form- und Schweissoperationen aufweist, ist.

## Patentansprüche

Verfahren zur molekularen Orientierung von Kunststoffmaterial, wobei man einen Schlauch (3) aus Kunststoffmaterial in einen mit einer erhitzten Flüssigkeit (7) gefüllten Behälter (6) einführt und unter Druck Flüssigkeit in das Innere des Schlauches (3) einführt, der infolge des in dem Schlauch (3) herrschenden Innendruckes ausgedehnt wird, und zwar vorzugsweise in der Querrichtung des Schlauches, dadurch gekennzeichnet, dass man den Schlauch (3) aus einer vorgefertigten Bahn (2) aus Kunststoffmaterial herstellt, indem man die Längsränder der Bahn (2) unter Bildung einer dichten und festen Längsnaht miteinander verbindet, dass man ein Füllrohr (4) für die Zuführung von unter Druck stehender erhitzer Flüssigkeit, vorzugsweise Wasser, durch ein offenes Ende in den Schlauch (3) einführt, das Füllrohr (4) mit einer Dichtung (12) versieht, die um das Füllrohr (4) herum angeordnet ist, und den Raum zwischen der Aussenseite des Füllrohres (4) und der Innenseite des Schlauches (3) dicht abschliesst, dass man den Schlauch (3) in geöffnetem Zustand durch ein Loch (11) in der Behälterwandung in den Behälter (6) einführt, dass man den unter Orientierung gereckten Schlauch (3) nach dem Verlassen des mit erhitzter Flüssigkeit (7) gefüllten Behälters (6) durch einen Walzenspalt frei in einen zweiten, mit kalter Flüssigkeit (9) gefüllten Behälter (8) einführt, um den Schlauch in gesteuerter Weise zu kühlen, und das die erhitzte Flüssigkeit (7) in dem Behälter (6) und die unter Druck stehende Flüssigkeit in dem Schlauch (3) eine Temperatur von 70 bis 100°C, vorzugsweise 80 bis 90°C, haben.

### Claims

A method for the molecular orientation of plastic material, whereby a tube (3) of plastic material is introduced in a container (6) filled with a heated liquid (7) and introduced under pressure into the interior of the tube (3) which, owing to the internal pressure prevailing in the tube (3) is thereby made to expand, preferably in transverse direction of the tube (3) <u>characterized in that</u> the tube is made from a pre-fabricated web (2) of plastic material in that the longitudinal edges of the web (2) are joint together to form a tight and strong longitudinal joint, that a filler pipe (4) for the supply of pressurized liquid, prefarably water, is introduced in the tube (3) through an open end thereof, that the filler pipe (4) is provided with a seal (12) which is arranged around the filler pipe (4) and which seals off the space between the outside of the filler pipe (4) and the inside of the tube (3), that the open tube (3) is introduced into the container (6) through a hole (11) in the wall of the container (6), that the orientation-stretched tube (3) after it has left the container (6) filled with heated liquid (7), through the space between cooperating rollers is introduced into a second container (8) filled with cold liquid (9) for the purpose of a controlled cooling of the tube and that the heated liquid (7) in the container (6) and the pressurized liquid in the tube (3) have a temperature of 70-100°, preferably 80-90°C.

### Revendications

Procédé pour l'orientation moléculaire de matière plastique dans lequel on introduit une gaine (3) en matière plastique dans un récipient (6) rempli d'un liquide chauffé (7) et on introduit du liquide sous pression à l'interieur de cette gaine (3), laquelle se dilate, de préférence dans sa direction transversale, en raison de la pression interne qui y règne, caractérisé en ce qu'on réalise la gaine (3) à partir d'une bande préfabriquée (2) de matière plastique en joignant les bords longitudinaux de cette bande (2) pour former un joint longitudinal étanche et solide, qu'on introduit dans la gaine (3) par une extrémité ouverte de celle-ci un tuyau de remplissage (4) pour l'amenée de liquide sous pression chauffé, de préférence d'eau, qu'on pourvoit ce tube de remplissage (4) d'un joint (12) placé autour de lui et qui ferme hermétiquement l'espace entre la face extérieure du tube de remplissage (4) et la face intérieure de la gaine (3), qu'on introduit la gaine (3) à l'état ouvert dans le récipient (6) par un orifice (11) fait dans la paroi de celui-ci, qu'à sa sortie du récipient (6) rempli de liquide chauffé (7), on introduit librement la gaine (3) étirée avec orientation dans un deuxième récipient (8) rempli de liquide froid (9) par un interstice entre des rouleaux pour la refroidir de manière contrôlée, et que le liquide chauffé (7) contenu dans le récipient (6) et le liquide sous pression contenu dans la gaine (3) ont une température de 70 à 100°C, de préférence de 80 a 90°C.

*Fig.1*

*Fig.2*

0 060 602